# FASCICULE DE BREVET EUROPEEN

(11) **EP 1 177 477 B1**
(45) Date de publication et mention de la délivrance du brevet: **27.07.2005**
(21) Numéro de dépôt: 00927308.7
(22) Date de dépôt: 28.04.2000
(51) Int. Cl.: G03B 21/62

(54) **ECRAN DE PROJECTION**
PROJEKTIONSSCHIRM
PROJECTION SCREEN

(30) Priorité: 29.04.1999 FR 9905480; 10.06.1999 FR 9907352
(43) Date de publication de la demande: 06.02.2002
(73) Titulaire: Synelec Telecom Multimedia, 12380 Saint-Sernin-sur-Rance (FR)
(72) Inventeur: GIBILINI, Daniel, F-38410 Saint Martin d'Uriage (FR)
(74) Mandataire: Cabinet Hirsch
(86) Numéro de dépôt international: PCT/FR2000/001156
(87) Numéro de publication internationale: WO 2000/067071

(56) Documents cités:
- FR-A- 959 731
- FR-A- 972 333
- FR-A- 980 402
- FR-A- 1 266 832
- GB-A- 389 611
- US-A- 4 666 248

## Description

La présente invention concerne le domaine de la projection, et plus spécifiquement concerne les écrans utilisés tant pour la projection frontale que pour la rétroprojection.

La projection ou projection frontale est la projection d'image sur une face d'un écran, appelée par convention dans la suite l'avant de l'écran, pour la visualisation des images sur l'avant de l'écran. Dans l'état actuel de la technique, ce type de projection s'effectue en salle sombre, l'exemple type étant la projection sur les écrans perlés pour le cinéma.

La rétroprojection est la projection d'image sur une face d'un écran, appelée par convention dans la suite l'arrière de l'écran, pour la visualisation des images sur l'autre face de l'écran, appelée par convention l'avant de l'écran. De tels écrans sont notamment utilisés pour les projections à grande échelle, ou pour les murs d'images; ces écrans, lorsqu'ils présentent un contraste suffisant, sont utilisés en salle normalement éclairée. On peut utiliser comme projecteur des projecteurs analogiques classiques, par exemple du type à trois tubes; on peut aussi, comme dans les dispositifs actuellement commercialisés par la demanderesse, utiliser des dispositifs numériques, tels que les micro-miroirs numériques vendus par la société Texas Instruments sous la référence DMD. On peut utiliser les écrans de rétroprojection dans d'autres applications, par exemple comme écran de filtrage d'une lumière collimatée ou légèrement divergente, i. e. avec un angle de divergence inférieur ou de l'ordre de 20°. De tels écrans peuvent trouver application en signalisation routière, comme filtres directifs sur des tubes à rayons cathodiques.

Les propriétés idéales d'un écran de rétroprojection sont :
- une bonne luminance, ou transmittivité, c'est-à-dire une capacité à transmettre la lumière dans le sens de l'arrière vers l'avant de l'écran, de sorte que les images projetées soient effectivement transmises vers le public, et qu'elles ne soient pas ou peu réfléchies vers le projecteur ni absorbées par l'écran;
- une forte absorption de la lumière dans le sens de l'avant vers l'arrière, de sorte que la lumière ambiante ne soit pas réfléchie vers le public en même temps que la lumière projetée depuis l'arrière;
- une bonne résolution, c'est à dire une capacité pour l'utilisateur de distinguer deux points projetés à faible distance l'un de l'autre;
- une directivité contrôlée, c'est-à-dire une possibilité de contrôler l'angle solide dans lequel sont envoyés les rayons traversant l'écran; de ce point de vue, on définit généralement le gain d'un écran en comparant ses caractéristiques à celle d'un écran réflecteur diffusant formé d'une couche d'oxyde de magnésium sur un support.

Les propriétés idéales d'un écran de projection sont sensiblement les mêmes :
- une capacité à réfléchir vers le public la lumière projetée sur l'avant de l'écran, de sorte que les images projetées soient effectivement réfléchies vers le public, et qu'elles ne soient pas ou peu absorbées par l'écran;
- une bonne résolution, c'est à dire une capacité pour l'utilisateur de distinguer deux points projetés à faible distance l'un de l'autre;
- une directivité contrôlée, c'est-à-dire une possibilité de contrôler l'angle solide dans lequel sont envoyés les rayons traversant l'écran; de ce point de vue, on définit généralement le gain d'un écran en comparant ses caractéristiques à celle d'un écran réflecteur diffusant formé d'une couche d'oxyde de magnésium sur un support.

Dans l'état actuel de la technique, les écrans de projection ne sont pas utilisés autrement qu'en salle noire, et le comportement de l'écran par rapport à la lumière ambiante n'est pas une propriété considérée.

On définit de façon connue en soi le contraste nominal d'un écran de rétroprojection comme le rapport L0/(1 x R)entre la lumière L0 émise par l'écran et le produit de la lumière 1 incidente sur l'écran par la réflexion R de l'écran. Cette définition s'applique tant à la projection qu'à la rétroprojection.

Dans le cas de la rétroprojection, une trop forte réflexion de la lumière dans le sens de l'avant vers l'arrière diminue le contraste d'une image projetée, et peut empêcher l'usage de l'écran autrement que dans une pièce sombre; le rétroprojecteur étant une boîte, la rétroprojection tolère une ambiance lumineuse minimale à la différence de la projection frontale. Ceci pose évidemment un problème pour des applications comme les salles de contrôle, ou des applications extérieures, comme des projections par exemples dans des stades.

Divers écrans de rétroprojection ont déjà été proposés. La solution la plus ancienne et la plus simple consiste à utiliser comme écran un verre dépoli. Un écran formé d'une plaque de verre dépoli à la grenaille constitue un dépoli lambertien, avec diffusion isotrope de la lumière: la transmittivité d'un tel écran est donc de 50 %, et le gain vaut 1. La réflexion dans le sens de l'avant vers l'arrière est de l'ordre de 10%, ce qui rend difficile l'utilisation d'un verre dépoli en lumière ambiante. La société Stewart Film Screen Corporation propose des écrans à dépoli amélioré, qui présente vers l'avant un gain ovalisé, et une diffusion de la lumière vers l'avant qui n'est pas isotrope. La transmittivité est toujours de l'ordre de 50 %, mais dans la direction d'utilisation de l'écran, le gain est supérieur à 1. En résumé, ces écrans dépolis présentent une haute résolution, mais un faible contraste, qui est typiquement de l'ordre de 10.

La société HIP propose des écrans qui sont formés d'un diffuseur en film mince sur un substrat transparent, sur lequel sont déposés des points noirs noyés dans le film mince diffusant; ces points noirs diminuent la réflexion de la lumière, et font augmenter le contraste de l'écran; toutefois, ils font aussi diminuer la transmittivité, et conduisent à des pertes d'informations. La transmittivité est de l'ordre de 50%, et le contraste typiquement entre 50 et 100.

Il est aussi connu, pour des applications de télévision, de prévoir des écrans lenticulaires. Ces écrans ont une structure ondulée suivant une direction horizontale, et invariante par translation suivant la direction verticale. L'ondulation permet un étalement de la lumière dans le sens horizontal, et élargit l'angle de vision dans ce sens. Il a aussi été proposé de prévoir à l'intérieur du matériau des noyaux de diffusion, par exemple des bulles diffusantes, pour assurer une diffusion contrôlée dans le sens vertical mais aussi dans le sens horizontal: l'angle de vision dans le sens vertical reste réduit, et est en tout état de cause lié à la concentration des bulles; l'utilisation de telles bulles diminue la résolution de l'écran. La résolution maximale est relativement faible, du fait de la taille minimale des ondulations, qui est de l'ordre de 0,3 mm. Avec des tailles d'ondulations de l'ordre de 0,8 à 1 mm, de tels écrans sont généralement utilisés pour la vidéo. Pour des applications graphiques en haute résolution, ces écrans posent des problèmes de Moiré locaux ou sur toute la surface de l'écran.

Un tel écran est décrit dans EP-A-0 241 986; il est prévu dans ce document de déposer entre les ondulations une matrice noire, de sorte à améliorer le contraste; cette matrice noire présente l'inconvénient d'absorber une partie de l'information. La transmittivité de ces écrans est de l'ordre de 55 %, et le contraste de l'ordre de 100. Les sociétés Dai Nippon Printing et Philipps proposent de tels écrans.

Au SID 99 (Symposium of International Display) de San José, Califomie, tenu du 16.05.99 au 20.05.99, la société Dai Nippon Printing a présenté un nouvel écran lenticulaire, présentant une couche absorbant la lumière ambiante, appliquée directement sur la surface externe cylindrique des ondulations; l'amélioration annoncée par rapport au produit précédent est la suivante

| | Ecran teinté | Ecran nouveau |
|---|---|---|
| Transmission optique | 54% | 57% |
| Retour R de la lumière ambiante | 11% | 6% |

La luminosité et le contraste de cet écran restent moyens.

J.M. Tedesco et autres, Holographic Diffusers for LCD backlights and projection screens, SID 93 Digest, pp. 29-32, mentionne, pour des applications de rétroprojection, l'utilisation d'un écran formé d'une lentille de Fresnel, d'un diffuseur classique, et d'une telle matrice lenticulaire. La lentille de Fresnel forme une image de l'ouverture de la lentille dans une partie médiane de l'espace image. Le diffuseur assure une diffusion limitée de l'image dans le sens vertical, et la matrice lenticulaire assure l'étalement de l'image dans le sens horizontal.

Au SID 99, la société SARNOFF Corp. a présenté un nouvel écran lenticulaire à matrice noire améliorée, sans toutefois indiquer comment la matrice noire avait été améliorée; le contraste apparaît bon, mais la luminosité reste moyenne, du fait d'une transmission qui atteint au maximum 60 %.

En résumé, ces écrans lenticulaires présentent une résolution faible, une luminosité moyenne, une faible directivité horizontale, mais une forte directivité verticale et un contraste élevé si la matrice noire est conséquente; toutefois, dans ce cas, la luminosité est dégradée.

La société Physical Optics Corporation commercialise sous la marque DDS (Digital Display Screen) des écrans destinés à la rétroprojection ou pour les moniteurs de télévision ou d'ordinateur. Ces écrans sont formés d'un support en polycarbonate, en polyester ou en acrylique teinté, sur lequel est collé un diffuseur holographique. Le diffuseur holographique est du type décrit dans US-A-5 609 939, et permet de contrôler l'angle de vision, c'est-à-dire l'angle solide dans lequel est transmis la lumière projetée sur l'écran. Ces écrans constituent une solution au problème de la directivité; toutefois, l'écran en acrylique teinté proposé pour les applications de rétroprojection présente une luminosité faible, du fait de sa transmissivité qui n'est que de l'ordre de 50 %. En résumé, ces écrans assurent une bonne résolution, un contrôle efficace de la directivité dans le sens horizontal comme dans le sens vertical; le contraste et la transmissivité restent faibles du fait notamment de l'utilisation d'un matériau teinté dans la masse; un tel matériau présente une transmission trop faible pour assurer une bonne luminosité, et encore trop élevée pour assurer un bon contraste. Un contraste de l'ordre de 50 est habituel. D'autres fournisseurs de films holographiques transmissifs sont Denso (Japon), ou l'Institut National d'Optique (INO, Canada). Des films holographiques sont fournis par Physical Optics Corporation, ou encore par la société américaine Krystal Holographics International Inc.

L'article précité de J.M. Tedesco et autres propose d'associer un diffuseur holographique à une lentille de Fresnel pour pallier les problèmes posés par les matrices lenticulaires.

US-A-5 781 344 et US-A-5 563 738 décrivent des filtres à faible réflectance du type utilisé actuellement par la demanderesse pour des produits de rétroprojection. Ces filtres sont composés d'un support, d'une matrice opaque, et de billes qui sont enfoncées dans la matrice opaque de sorte à venir au contact du support. La lumière provenant du projecteur et focalisée par les billes traverse la matrice opaque uniquement lorsqu'elle passe au point de contact entre les billes et le support, ou au voisinage de celui-ci. Pour permettre de régler les propriétés optiques des filtres, ces documents suggèrent de prévoir au-dessus de la matrice opaque, du côté des billes, une ou plusieurs couches supplémentaires, entre les billes ou au-dessus de celles-ci. Afin d'améliorer le contraste, en diminuant la quantité de lumière passant entre les billes, il est proposé dans ce document de déposer au-dessus de la matrice opaque une couche opaque. Cette couche peut par exemple être générée par dépôt d'un pigment en poudre, et par chauffage du filtre jusqu'à ce que le pigment diffuse dans la partie supérieure de la matrice opaque.

Ce filtre présente une haute résolution, du fait de la faible taille des billes et de leur proximité. Toutefois, le taux de remplissage de la surface arrière par les billes atteint à peine 70 %, ce qui diminue la luminance. On atteint typiquement une transmittivité de l'ordre de 50% et un contraste de l'ordre de 200.

Les sociétés Mems Optical Corporation et RPC aux U.S.A., proposent des réseaux de micro-lentilles. Ces micro-lentilles sont obtenues par des techniques de lithographie par attaque ionique, qui sont par exemple décrites dans la demande WO-A-98 32 590. Les micro-lentilles présentent une taille de 10 à 2000 microns, et sont disposés régulièrement, en cercle, suivant des hexagones, des carrés ou des rectangles. De telles micro-lentilles ne sont pas utilisées pour des applications de rétroprojection.

La société Polaroïd a présenté au SID 99 un écran dédié exclusivement à la projection LCD (acronyme de l'anglais Liquid Crystal Display, afficheur à cristal liquide). Il s'agit d'un diffuseur muni d'un film polarisateur linéaire; dans la cellule LCD, un seul polarisateur linéaire n'est utile, croisé avec celui de l'écran. La lumière ambiante traverse le polarisateur de l'écran, est rétrodiffusée par le diffuseur, et de ce fait est absorbée en retraversant le polarisateur d'écran.

GB-A-389 611 décrit un écran de projection, dont la surface arrière - la surface sur laquelle arrive la lumière du projecteur - est formée d'un grand nombre de systèmes optiques focalisants. Ces systèmes optiques focalisent la lumière provenant d'une source à l'infini vers des ouvertures ménagées dans une couche noire. Il est suggéré de former ces ouvertures dans la couche noire en déposant un film photographique sur la surface arrière de l'écran, en exposant l'écran et en développant le film photographique. En collant sur la face avant de l'écran, au-dessus de la couche noire un matériau transparent avec des irrégularités de surface, ou un matériau semi-transparent, l'écran est utilisable à la lumière du jour. Dans un mode de réalisation, les systèmes optiques focalisants de la surface arrière sont formés d'une superposition de deux réseaux comprenant chacun des lentilles cylindriques.

L'utilisation d'un matériau semi-transparent ou laiteux dans la masse fait considérablement diminuer le contraste de l'écran car il y a rétrodiffusion d'une partie non négligeable (de 30 à 40%) de la lumière ambiante vers l'utilisateur. Le fait d'utiliser comme diffuseur des irrégularités de surface d'un matériau transparent fait aussi diminuer le contraste. De ce fait, le contraste de l'écran proposé dans ce document est inférieur à 100.

GB-A-1 440 016 propose un écran de projection du même genre. Il est proposé dans ce document de prévoir sur la face avant d'un support d'éléments de focalisation une couche noire, de ménager des ouvertures dans la couche noire, et de prévoir un matériau diffuseur dans les ouvertures. Rien dans ce document n'indique comment former le matériau diffuseur dans les ouvertures de la couche noire.

Il est difficile pour les écrans proposés dans ces deux documents de contrôler la directivité des écrans, c'est-à-dire l'orientation des rayons lumineux en sortie de l'écran. En outre, ces écrans ne permettent pas d'offrir un bon contraste, en même temps qu'une surface avant présentant un aspect brillant. Les écrans de ces deux documents présentent en outre des aberrations importantes.

GB-A-389 611 propose, dans un mode de réalisation, un écran formé d'une couche en verre ou celluloïde avec des lentilles sur une surface.

US-A-4 666 248 décrit un écran de rétroprojection présentant une couche transparente, et sur l'arrière de l'écran, une couche absorbante avec des ouvertures et une couche de lentilles anamorphiques. Ce document précise qu'environ 75% de la couche intermédiaire est absorbante. Il est proposé, dans un mode de réalisation, de disposer une couche antireflet ou une couche de micro-reliefs sur une surface ou sur les deux surfaces de l'écran.

FR-A-980 402 concerne un écran de projection en transparence - autrement dit un écran de rétroprojection. Cet écran présente deux groupes de lentilles cylindriques, dont les axes sont décalés, ou des éléments lenticulaires formés par l'intersection de telles lentilles cylindriques. Sur la face opposée aux éléments lenticulaires, on forme une couche opaque avec des ouvertures, par un procédé d'impression photographique. La majeure partie de cette couche est opaque.

FR-A-972 333 propose un dispositif de rétroprojection; il présente sur une face des échelons microscopiques, par exemple une lentille de Fresnel. Sur l'autre face est prévue une couche opaque avec des ouvertures, formée par un procédé photographique.

FR-A-959 731 propose un écran de rétroprojection. Il est formé d'une couche de support, d'une couche absorbante formée sur le support et d'une multitude de petites sphères enfoncées dans la couche opaque pour définir des pupilles.

JP-A-3 127 041 décrit divers écrans de rétroprojection, formés d'un support, d'éléments lenticulaires moulés sur une des faces du support, d'une couche opaque avec des ouvertures sur l'autre face du support avec le cas échéant des éléments lenticulaires formés dans les ouvertures de la couche opaque. L'un ou plusieurs de ces éléments peut être constitué d'un diffuseur volumique.

US-A-5 745 288 décrit un écran, avec une feuille munie sur une face de lentilles et sur l'autre face de lentilles en alternance avec des nervures. Sur les nervures est appliquée une couche opaque. Un film est collé sur les nervures, mais pas sur les lentilles entre les nervures. Sur la face opposée aux nervures, le film peut être muni d'irrégularités pour diffuser la lumière extérieure.

US-A-5 611 611 divulgue un écran de rétroprojection, comprenant une feuille munie sur une face de lentilles et sur l'autre face de nervures et de rainures aux points de focalisation des lentilles. Les nervures sont couvertes d'une couche opaque. Une plaque de renfort est assemblée sur les nervures et les rainures à l'aide d'une couche de résine photodurcissable. L'indice de la plaque de renfort est choisi pour augmenter l'angle de vision en sortie d'écran; la plaque peut être diffusante en volume.

EP-A-1 014 169 propose un écran de rétroprojection avec des éléments lenticulaires focalisant la lumière reçue d'une lentille de Fresnel vers des ouvertes formées dans une couche opaque. Un substrat en résine est formé par-dessus la couche opaque. Les divers éléments de l'écran peut être formés d'un matériau diffusant en volume.

US-A-3 832 032 décrit un écran de rétroprojection. Sur une face de l'écran sont formés des éléments lenticulaires. Sur l'autre face de l'écran est plane et présente une alternance de bandes opaques et de bandes diffusantes. Les bandes diffusantes peuvent être formées par sablage de l'autre face, suivant une direction de sablage déterminée. WO-A-96 07953 décrit un écran du même genre. Les bandes diffusantes forment un diffuseur holographique.

US-A-5 870 224 divulgue un écran de rétroprojection formé d'un support, d'éléments lenticulaires moulés sur une des faces du support, d'une couche opaque avec des ouvertures sur l'autre face du support, d'une couche diffusante par-dessus la couche opaque et dans les ouvertures de la couche opaque et d'une couche de protection par-dessus la couche diffusante.

L'invention propose une solution aux différents problèmes des écrans de rétroprojection. Elle fournit un écran avec une excellente transmittivité de l'arrière vers l'avant, une bonne absorption de l'avant vers l'arrière; elle assure ainsi un excellent contraste. En outre, dans un mode de réalisation, elle permet de contrôler la directivité; elle évite aussi les effets de moiré provoqués par la périodicité des surfaces. Dans un autre mode de réalisation, l'invention propose aussi un écran dont la surface avant présente un aspect brillant, et qui présente néanmoins un excellent contraste et une directivité contrôlée.

Plus précisément, l'invention propose un écran comme défini dans la revendication 1, comprenant un support avec des éléments de focalisation, et une couche opaque avec des ouvertures pour laisser passer la lumière focalisée par les éléments de focalisation.

Dans un mode de réalisation, la couche opaque est voisine des points de focalisation des éléments de focalisation.

De préférence, les ouvertures sont non-ponctuelles.

Dans un mode de réalisation, les ouvertures présentent une dimension comprise entre 2 micromètres et 200 micromètres.

Dans un autre mode de réalisation, les ouvertures représentent moins de 10% de la surface de la couche opaque, et de préférence moins de 5% de cette surface.

Dans encore un autre mode de réalisation, l'écran présente un contraste supérieur à 250, et de préférence supérieur à 5 00.

De préférence, les éléments de focalisation présentent une dimension comprise entre 20 micromètres et 1 millimètre.

Dans un mode de réalisation, l'écran présente une transmittivité supérieure à 70%.

Dans un autre mode de réalisation, le carré (φₜᵣₒᵤₛ/φ_{focalisation})² du rapport entre la dimension φₜᵣₒᵤₛ des ouvertures et la dimension φ_{focalisation} des éléments de focalisation est inférieur ou égal à 10%, de préférence inférieur ou égal à 5%.

Dans le cas d'éléments de focalisation lenticulaires, le rapport entre la largeur de l'ouverture transparente en forme de ligne et la distance entre deux lignes adjacentes dans la couche opaque est avantageusement inférieur ou égal à 10%, de préférence inférieur ou égal à 5%.

Avantageusement, le taux de remplissage par les éléments de focalisation est supérieur ou égal à 90%.

Les éléments de focalisation peuvent comprendre des micro-billes. Dans ce cas, l'écran présente de préférence une transmittivité supérieure ou égale à 80%, de préférence supérieure ou égale à 85%.

Les éléments de focalisation peuvent aussi comprendre des micro-lentilles ou des éléments lenticulaires. Dans ce cas, l'écran présente de préférence une transmittivité supérieure ou égale à 90%, de préférence supérieure ou égale à 95%.

Dans un mode de réalisation, l'écran comprend en outre un diffuseur adjacent à la couche opaque; il s'agit avantageusement d'un diffuseur contrôlant la directivité, comme un diffuseur holographique.

Il est avantageux que l'écran comprenne une couche d'écartement entre le support et le diffuseur, de préférence d'une épaisseur de quelques microns à quelques dizaines de microns. Dans ce cas, la surface active du diffuseur peut être dirigée vers la couche d'écartement. On peut encore prévoir une plaque transparente adjacente au diffuseur et collée à celui-ci.Dans encore un mode de réalisation, l'écran comprend un réflecteur adjacent à la couche opaque; il s'agit de préférence d'un réflecteur contrôlant la directivité.

L'invention propose aussi deux procédés de fabrication d'un écran selon les revendications 23 et 24, comprenant les étapes de :
- fourniture d'un support présentant une pluralité d'éléments de focalisation, et d'un matériau s'étendant en couche au voisinage des points de focalisation des dits éléments de focalisation;
- irradiation du matériau à travers les éléments de focalisation ;
- formation en utilisant le matériau irradié d'une couche opaque présentant des ouvertures.

Dans un mode de mise en oeuvre, les éléments de focalisation comprennent des micro-lentilles, des éléments lenticulaires ou des micro-billes.

Avantageusement, le procédé comprend dans ce cas une étape de formation d'une deuxième couche opaque entre les micro-billes, préalable à l'étape d'irradiation.

Dans un mode de mise en oeuvre, le matériau est une résine photosensible positive opaque, et l'étape de formation comprend le développement de la résine.

Dans un autre mode de mise en oeuvre le matériau est un matériau destructible par irradiation, et l'étape de formation s'effectue par destruction du matériau en même temps que l'étape d'irradiation.

Dans encore un mode de mise en oeuvre, le matériau est un matériau photographique positif, et l'étape de formation comprend le développement du matériau photographique.

Dans encore un autre mode de mise en oeuvre, le matériau est un matériau décolorable par irradiation, et l'étape de formation s'effectue par décoloration du matériau en même temps que l'étape d'irradiation.

On peut aussi prévoir les étapes de :
- formation sur le support ou la couche opaque d'une couche d'écartement d'une épaisseur de quelques microns à quelques dizaines de microns;
- formation d'ouvertures dans la dite couche, en correspondance aux points de focalisation des dits éléments de focalisation; et
- collage d'un diffuseur sur la dite couche, une face active du diffuseur étant tournée vers la dite couche.

Dans ce cas, il est avantageux se prévoir aussi une étape d'application par collage d'une plaque transparente sur le diffuseur.

L'invention propose enfin un écran présentant un contraste supérieur à 250, et de préférence supérieur à 500.

D'autres caractéristiques et avantages de l'invention apparaîtront à la lecture de la description qui suit de modes de réalisation de l'invention, donnée à titre d'exemple et en référence aux dessins annexés, qui montrent
- figure 1, une représentation schématique en coupe d'un écran selon un exemple;
- figure 2, une représentation schématique en coupe d'un écran selon un mode de réalisation de l'invention;
- figure 3, une représentation schématique en coupe d'un écran selon un deuxième mode de réalisation de l'invention;
- figure 4, une représentation schématique d'un écran réfléchissant, au voisinage du centre de l'écran ;
- figure 5, une représentation schématique de l'écran de la figure 4, au voisinage de son bord;
- figure 6, une représentation schématique en coupe d'un écran selon un autre exemple;
- figure 7, une représentation schématique en coupe d'un écran selon un troisième mode de réalisation de l'invention.

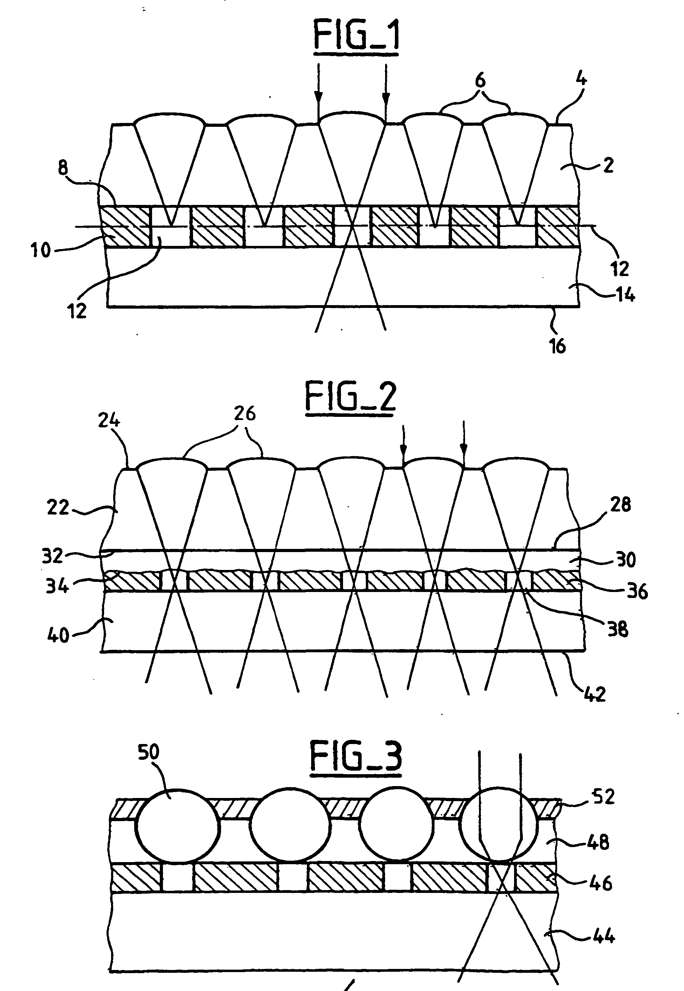

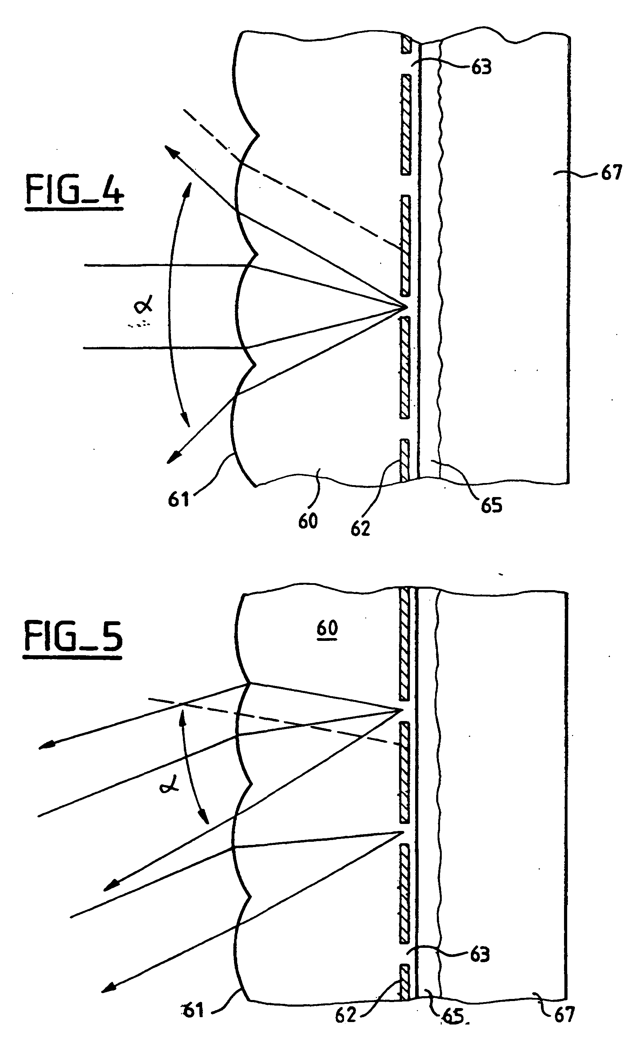

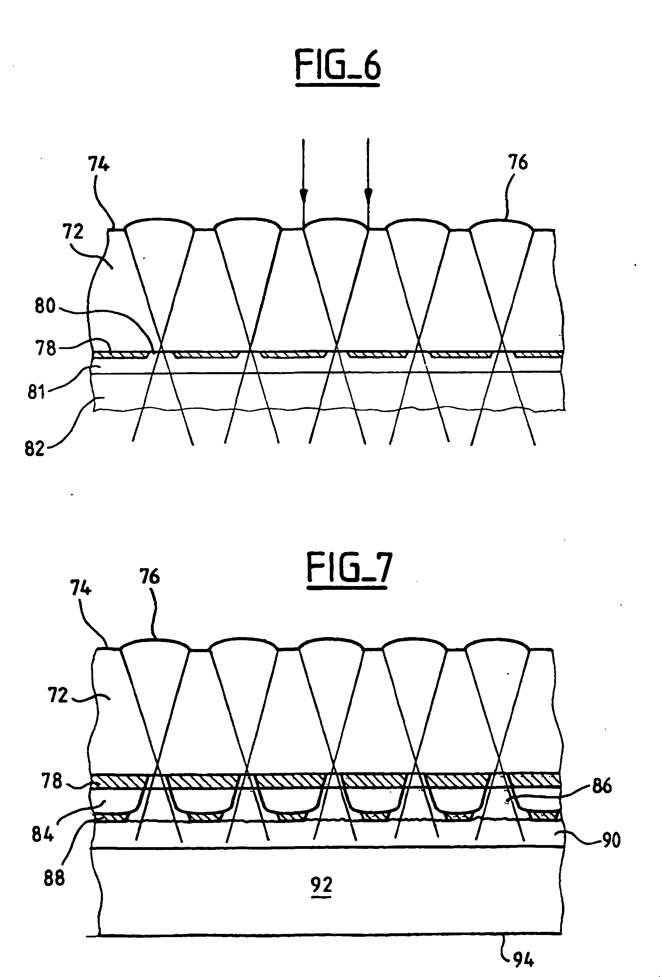

L'invention propose un écran formé d'un ensemble d'éléments de focalisation, auquel est associée une couche opaque, avec des ouvertures transparentes, pour laisser passer la lumière focalisée par les éléments de focalisation. L'écran de l'invention peut être utilisé pour la rétroprojection, comme les écrans des figures 1 à 3, ou pour la projection frontale pour les écrans des figures 4 et 5.

Les éléments de focalisation peuvent par exemple comprendre des micro-billes, comme dans les modes de réalisation de la figure 3, ou aussi des micro-lentilles ou éléments lenticulaires, comme dans les modes de réalisation des figures 1 et 2. Ces éléments de focalisation assurent une forte luminance, et une transmission quasi-totale de la lumière projetée sur l'arrière de l'écran vers l'avant de l'écran; ceci est notamment le cas pour des micro-lentilles ou des éléments lenticulaires, pour lesquels le taux de remplissage peut atteindre ou dépasser 90 %, voire 95 %. La transmittivité peut dépasser 70%; elle atteint typiquement 90%, voire 95% sans couche holographique, dans le cas où les éléments focalisants sont des micro-lentilles ou des éléments lenticulaires. Elle atteint 80%, voire 85% sans couche holographique, dans le cas où les éléments focalisants sont des micro-billes.

Il est particulièrement avantageux que la longueur focale de ces éléments de focalisation soit assez longue, de sorte à minimiser les aberrations chromatiques. Typiquement, on choisira de préférence une longueur focale supérieure ou égale à 1,5 mm, par exemple voisine de 2 mm. Pour des éléments de focalisation présentant dans le plan de l'écran une taille de l'ordre de 300 µm, une telle longueur focale assure que la lumière focalisée par les éléments de focalisation est contenu dans un cône d'angle au centre supérieur à 5,7° (aretan(0,150/1,5)), ce qui minimise les aberrations induites par les éléments de focalisation.

Du fait que la couche opaque présente des ouvertures transparentes pour laisser passer la lumière focalisée par les éléments de focalisation, mais absorbe la lumière incidente, l'écran de l'invention permet d'atteindre un contraste élevé; on peut atteindre des contrastes de 250 ou plus, voire des contrastes supérieurs à 500. On peut prévoir des trous de dimension entre quelques micromètres et quelques dizaines de micromètres, voire 200 micromètres pour des micro-lentilles de 1 mm. La surface opaque peut représenter plus de 90%, voire plus de 95% de la surface de l'écran, de sorte à absorber quasiment toute la lumière incidente sur l'écran.

Une autre définition de l'invention peut être donnée par le rapport entre la dimension des ouvertures- leur diamètre φₜᵣₒᵤₛ si elles sont circulaires - et la dimension des éléments de focalisation - leur diamètre φ_{focalisation} s'ils sont circulaires. De préférence, le carré (φₜᵣₒᵤₛ/φ_{focalisation})² de ce rapport est inférieur ou égal à 10%, voire inférieur ou égal à 5%.

Dans le cas d'éléments de focalisation lenticulaires, les ouvertures dans la couche opaque présentent la forme de lignes; cette relation s'écrit alors : le rapport entre la largeur de l'ouverture transparente en forme de ligne et la distance entre deux ouvertures ou lignes adjacentes dans la couche opaque est inférieur ou égal à 10%, de préférence inférieur ou égal à 5%.

On peut aussi prévoir que la dimension des ouvertures est inférieure à 20% de la dimension des éléments de focalisation. Dans le cas d'éléments lenticulaires, la largeur des lignes ou ouvertures est inférieure à 10 ou 5% de la largeur des éléments lenticulaires.

Chaque élément de focalisation assure une focalisation de la lumière projetée; le matériau formant la couche opaque est disposé de sorte que les ouvertures laissent passer la lumière focalisée par les éléments de focalisation, pour maximiser la luminance du projecteur, et donc le contraste.

L'invention propose en outre un procédé de fabrication d'écran, qui assure un fort contraste. Pour assurer ce contraste, le procédé de l'invention propose de former la couche opaque par irradiation à travers les éléments de focalisation. Le procédé s'applique particulièrement à la fabrication d'écran tels que ceux qui sont décrits ci-dessous.

La figure 1 montre une représentation schématique en coupe d'un écran selon un premier exemple dont les éléments de focalisation sont composés de micro-lentilles; on pourrait aussi utiliser des éléments lenticulaires, et dans ce cas, la figure 1 est une vue en coupe dans un plan perpendiculaire à la direction d'invariance des éléments lenticulaires. L'écran de la figure 1 présente un support 2 présentant sur une surface arrière 4 une pluralité de micro-lentilles 6. On peut utiliser comme support à micro-lentilles les produits commercialisés par les sociétés Mems Optical et RPC mentionnées plus haut. La forme et la disposition des micro-lentilles peuvent être choisies en fonction de l'application, et on peut par exemple utiliser des micro-lentilles allongées pour disposer d'une directivité plus faible dans une direction. De telles formes de micro-lentilles peuvent être utilisées en remplacement d'un diffuseur holographique du type discuté plus bas, ou encore en combinaison avec un tel diffuseur holographique, pour renforcer l'efficacité du diffuseur holographique du point de vue de la directivité.

Sur la surface avant 8 du support 2 est disposée une couche opaque 10. Dans le mode de réalisation de la figure, les micro-lentilles sont choisies de sorte que leur point de focalisation soit voisin de la couche opaque, et de préférence se trouve dans le plan médian 11 de la couche opaque. En pratique, pour des couches opaques fines, il suffit que le point de focalisation des micro-lentilles soit voisin de la surface avant du support 8.

La couche opaque présente des ouvertures 12, qui laissent passer la lumière focalisée par les micro-lentilles. Ces ouvertures dans la couche opaque sont disposées de sorte à laisser passer la lumière focalisée par les éléments de focalisation, et sont d'une dimension suffisamment faible pour permettre d'obtenir un contraste élevé. La dimension des ouvertures peut par exemple être inférieure à 20% de la dimension des micro-lentilles. On peut aussi simplement prévoir que les ouvertures représentent moins de 10%, voire moins de 5% de la surface de la couche opaque, ou encore que le carré du rapport (φₜᵣₒᵤₛ/φ_{focalisation})² entre la dimension des ouvertures et la dimension des micro-lentilles est inférieur à 10%, voire de préférence inférieur à 5%. Dans le cas d'éléments lenticulaires, comme expliqué plus haut, ce rapport est transformé en le rapport entre la largeur des ouvertures en forme de ligne et la distance entre des ouvertures adjacentes.

En pratique, la solution la plus simple pour obtenir des ouvertures de faible dimension, et donc un contraste élevé, consiste à disposer la couche opaque au voisinage des points de focalisation des éléments de focalisation, comme dans le mode de réalisation de la figure 1; ceci n'est pas indispensable si les ouvertures sont d'une dimension suffisamment faible par rapport à l'ensemble de la couche opaque, ou par rapport à la dimension des éléments de focalisation. Plus généralement les rayons traversant la couche opaque peuvent être convergents ou divergents. Dans le mode de réalisation de la figure 7, on utilise des rayons divergents.

La nature de la couche opaque et son procédé de fabrication sont par exemple ceux indiqués ci-dessous. On entend par ouverture une zone dans laquelle la couche opaque ne s'étend pas ou laisse passer la lumière focalisée par les éléments de focalisation. Ces ouvertures sont en fait transparentes pour la lumière utilisé dans le rétroprojecteur.

L'écran peut encore présenter un substrat de support 14, en verre ou en plastique, avec le cas échéant une couche anti-reflet 16.

L'écran de la figure 1 assure une très bonne luminance. De fait, le taux de remplissage du support 2 par les micro-lentilles peut dépasser 90%, voire 95 %. De la sorte, quasiment l'ensemble de la lumière projetée sur la face arrière de l'écran est condensé par les micro-lentilles et traverse la couche opaque pour être visible par les utilisateurs de l'écran. En outre, l'atténuation provoquée par un support à micro-lentilles est quasiment nulle, dans la mesure où l'on peut utiliser pour sa fabrication un matériau transparent.

L'écran assure en outre un très bon contraste. Comme les points focaux des micro-lentilles sont voisins de la couche opaque, et sont de préférence dans la couche opaque, celle-ci peut s'étendre sur une proportion importante de la surface de l'écran. A titre d'exemple, pour des micro-lentilles disposées en hexagone et espacées de 205 microns, d'un diamètre unitaire de 200 microns, sur un support d'épaisseur 700 microns, avec une distance focale de 600 microns, on peut prévoir au voisinage du point focal de chaque micro-lentille une ouverture 12 de diamètre de l'ordre de 35 microns; dans une telle configuration, chaque ouverture laisse passer la lumière focalisée par un élément de focalisation, et le carré du rapport (φₜᵣₒᵤₛ/φ_{focalisation})² entre le diamètre des trous et le diamètre des micro-lentilles est de l'ordre de 3%. La couche opaque s'étend sur plus de 95% de la surface de l'écran, et le contraste est supérieur à 300 sous un éclairement de 1000 lux.

L'écran assure en outre une bonne résolution. En effet, la résolution ne dépend que de la taille des micro-lentilles, et de la distance entre celles-ci. Dans l'exemple, la résolution est de l'ordre de 200 microns.

L'écran de la figure 1 est particulièrement adapté à la rétroprojection analogique. Il peut aussi être utilisé pour la rétroprojection numérique; dans ce cas, il est avantageux pour éviter les effets de moiré sur l'écran de disposer les micro-lentilles en correspondance des pixels projetés ou affichés.

La figure 2 montre une représentation schématique en coupe d'un écran selon un mode de réalisation de l'invention; le mode de réalisation de la figure 2, par rapport à l'exemple de la figure 1, permet de contrôler la directivité de l'écran, et d'éviter dans des applications numériques les effets de moiré sans pour autant devoir aligner les micro-lentilles et les pixels projetés. Comme dans le cas de la figure 1, les éléments de focalisation peuvent être constitués d'éléments lenticulaires.

L'écran de la figure 2 présente un support 22 présentant sur une surface arrière 24 une pluralité de micro-lentilles 26. Sur la surface avant 28 du support est fixé, par exemple par lamination, un diffuseur 30 contrôlant la directivité, par exemple un diffuseur holographique du type commercialisé par la société Physical Optics Corporation; on peut aussi utiliser les films des autres fournisseurs mentionnés plus haut. Dans l'exemple de la figure, le diffuseur 30 présente une surface lisse 32 qui est disposée, par exemple collée, contre la surface avant 28 du support 22. La surface 34 du diffuseur 30 présentant l'impression ou le gaufrage holographique couverte d'une couche opaque 36.

Comme dans le mode de réalisation de la figure 1, les micro-lentilles sont conformées, en fonction de l'épaisseur du diffuseur 30, de sorte que le point focal de chaque micro-lentille soit voisin de la couche opaque. Celle-ci présente, comme dans le cas de la figure 1, des ouvertures 38 à proximité des points focaux des micro-lentilles, qui laissent passer la lumière concentrée par les micro-lentilles et diffusée par le diffuseur 30. Comme le diffuseur est voisin de la couche opaque, les rayons lumineux déviés par le diffuseur traversent les ouvertures de la couche opaque. La nature de la couche opaque et son procédé de fabrication sont ceux indiqués ci-dessous.

L'écran présente ensuite un substrat 40 en verre ou en plastique, avec le cas échéant une couche anti-reflet sur sa surface avant 42. Pour améliorer le fonctionnement du diffuseur holographique, le substrat est assemblé par collage à l'aide de points de colles, qui ne recouvrent pas les ouvertures; on assure ainsi que la colle éventuelle ne perturbe pas le fonctionnement du diffuseur holographique au voisinage des ouvertures. On peut pour déposer la colle utiliser les techniques connues en micro-électronique. On peut aussi utiliser simplement des points de colle, recouvrant une faible surface de l'écran, y compris le cas échéant des ouvertures: si la surface de colle est faible par rapport à la surface de l'écran, l'effet de la colle peut alors être négligé. On peut aussi utiliser des espaceurs de quelques microns entre le diffuseur holographique et le substrat. Si nécessaire, le substrat 40 est muni d'une couche anti-reflet sur ses deux faces.

L'écran de la figure 2 présente tous les avantages de celui de la figure 1. La présence du diffuseur 30 permet en outre de contrôler la directivité; l'effet du diffuseur sur la luminance est faible; les diffuseurs holographiques fournis par la société Physical Optics Corporation présentent par exemple une transmissivité supérieure à 90% dans le sens de l'arrière vers l'avant. Le diffuseur n'a pas d'effet sur la lumière incidente sur la face avant de l'écran, et le contraste reste du même ordre que pour l'écran de la figure 1.

En outre, les quelques 10 % de lumière rétrodiffusée soit traversent les micro-lentilles et sont absorbés dans le rétroprojecteur à parois internes noircies, soit sont réfractés par réfraction totale à travers les micro-lentilles et sont dirigés vers l'avant où ils sont absorbés à 95 % par la couche noire d'écran.

L'écran de la figure 2 peut aussi être utilisé plus facilement pour des rétroprojections numériques; la présence du diffuseur 30 évite les effets de moiré provoqués par la périodicité des pixels projetés et des micro-lentilles, sans qu'il soit nécessaire d'aligner les pixels projetés et les micro-lentilles.

On peut utiliser l'enseignement des exemples de réalisation des figures 1 et 2, avec des éléments de focalisation qui sont des micro-billes. Les diverses caractéristiques des écrans sont alors les mêmes, et notamment les dimensions relatives des ouvertures et des éléments de focalisation ou les dimensions relatives des ouvertures et la couche opaque peuvent être les mêmes.

On décrit maintenant un procédé de fabrication d'un écran; ce procédé s'applique avantageusement à la fabrication d'un écran du genre de ceux représentés aux figures 1 et 2. Le procédé comprend essentiellement la formation par irradiation à travers des éléments de focalisation des ouvertures dans la couche opaque pour laisser passer la lumière focalisée par les éléments de focalisation.

La nature de l'irradiation dépend de la nature de la couche opaque; des exemples sont donnés maintenant, dans le cas d'éléments de focalisation formés de micro-lentilles. Dans les exemples, on constatera que l'irradiation s'effectue soit directement sur la couche opaque, soit sur un matériau permettant ultérieurement la formation de la couche opaque. Dans tous les cas, la couche ou le matériau sont avantageusement disposé à la place de la couche opaque dans l'écran terminé.

Dans un premier mode de réalisation, la couche opaque est formée par photolithographie. Le procédé comprend alors une première étape de fourniture d'un support avec des micro-lentilles, et le cas échéant un diffuseur. Dans une deuxième étape, on dépose sur le support une résine photosensible positive, chargée préalablement avec des particules pour la rendre opaque. Dans le cas d'une couche opaque de couleur noire, pour des applications de projection en couleurs, on peut utiliser des particules de carbone, de ferrite noire, ou d'oxyde de cobalt. On peut par exemple utiliser comme résine la résine de type AZ vendue par la société Shipley.

Le procédé comprend ensuite une étape d'irradiation de la résine photosensible, par l'arrière, i. e. à travers les micro-lentilles, avec un rayonnement approprié à la nature de la résine. On comprend que la lumière utilisée pour l'irradiation est concentrée au voisinage des points focaux des micro-lentilles, et que la résine est donc exposée au voisinage de ces points focaux. L'irradiation est poursuivie pendant une durée suffisante pour exposer la résine de sorte à laisser ensuite passer la lumière focalisée par les micro-lentilles; la présence de particules opaques augmente la durée d'irradiation par rapport à la durée de consigne, mais une irradiation plus longue permet d'exposer la résine.

Il est avantageux que l'irradiation de la résine soit effectuée par une lumière dirigée comme la lumière ensuite projetée lors de l'utilisation de l'écran. Ainsi, si l'on utilise ensuite l'écran avec une source ponctuelle disposée en une position donnée par rapport à l'écran, on peut pour l'irradiation disposer la source d'irradiation dans la même position par rapport à l'écran. On améliore ainsi la transmittivité pour la lumière provenant directement de la source, et particulièrement sur les bords. Ceci est vrai non seulement pour le premier mode de réalisation maintenant décrit, mais aussi pour l'ensemble des modes de réalisation du procédé de l'invention.

Après l'étape d'irradiation, le procédé comprend une étape de développement de la résine, qui permet d'enlever la résine qui a été exposée.

Les techniques de photolithographie sont bien connues en tant que telles de l'homme du métier, et peuvent être appliquées sans difficultés.

Dans l'écran de la figure 1, le matériau est donc une résine photosensible positive chargée en particules opaques, et la formation de la couche opaque s'effectue en développant la résine et en enlevant la résine exposée lors de l'irradiation, aux points focaux des micro-lentilles, ou au voisinage de ceux-ci. Dans ce cas, l'épaisseur de la couche opaque est typiquement de quelques microns.

Dans un deuxième mode de réalisation de l'invention, la couche opaque est formée par irradiation, de sorte à détruire le matériau formant la couche opaque au voisinage des points focaux des micro-lentilles. Comme dans le premier mode de réalisation, le procédé comprend une première étape de fourniture d'un support avec des micro-lentilles, et le cas échéant un diffuseur. Dans une deuxième étape, on dépose directement sur le support le matériau destiné à former la couche opaque. On peut utiliser tout matériau opaque susceptible d'être détruit par irradiation d'un rayonnement concentré par les lentilles, et par exemple, on peut utiliser un film plastique noir, qui peut être percé par un laser au CO₂ à une longueur d'onde de 600 ou 800 nm. Dans ce cas, l'épaisseur de la couche opaque est typiquement de 2 à 3 microns.

Le procédé comprend ensuite une étape d'irradiation de la couche opaque, par l'arrière, i. e. à travers les micro-lentilles, avec un rayonnement approprié à la nature de la couche opaque. Dans l'exemple de produit donné plus haut, on peut utiliser un rayonnement laser. Comme dans le premier mode de réalisation, on comprend que la lumière utilisée pour l'irradiation est concentrée au voisinage des points focaux des micro-lentilles : la couche opaque est donc détruite au voisinage des points focaux des micro-lentilles. On peut le cas échéant prévoir une étape de lavage.

Dans ce mode de réalisation, le matériau irradié est directement le matériau de la couche opaque, et la formation de la couche opaque s'effectue lors de l'irradiation, par destruction du matériau.

Dans un deuxième mode de réalisation, on forme la couche opaque par photographie, à l'aide d'un film ou d'un matériau photographique positif. Le procédé comprend une première étape de fourniture d'un support avec des micro-lentilles, et le cas échéant un diffuseur. Dans une deuxième étape, on dépose sur le support un film photographique positif. De tels films sont connus en soi, et largement disponibles sur le marché, notamment auprès de Kodak, Agfa ou Fuji. Dans ce cas, l'épaisseur de la couche opaque est typiquement inférieure à 1 micron.

Le procédé comprend ensuite une étape d'irradiation de la couche opaque, par l'arrière, i. e. à travers les micro-lentilles, avec un rayonnement approprié à la nature de la couche opaque. Pour du film photographique positif, on peut simplement utiliser une lumière actinique quelconque, et tout simplement de la lumière blanche. La lumière utilisée pour l'irradiation est concentrée au voisinage des points focaux des micro-lentilles : le film est donc exposé au voisinage des points focaux des micro-lentilles. On peut ensuite procéder au développement du film photographique.

Après développement, le film est transparent au voisinage des points focaux des lentilles, et est noir - ou de toute autre couleur choisie - ailleurs. Comme précédemment, on peut alors déposer une couche protectrice, un substrat ou autre.

Dans ce deuxième mode de réalisation, le matériau est donc un film photographique; on peut aussi déposer directement sur le support ou l'hologramme un matériau photographique positif, ce qui évite le problème de développement du film depuis ses deux faces. Si on utilise un film photographique à développer sur ses deux faces, on peut procéder au développement préalable de la face du film destinée à être appliquée contre le support ou le diffuseur holographique.

Dans le deuxième mode de réalisation, l'étape de formation de la couche opaque comprend simplement le développement du film photographique, ou du matériau photographique.

Dans l'écran de la figure 6, on forme la couche opaque par décoloration d'un matériau. Le procédé comprend toujours une première étape de fourniture d'un support avec des micro-lentilles, et le cas échéant un diffuseur. Dans une deuxième étape, on dépose sur le support un matériau susceptible d'être décoloré par irradiation; on peut par exemple utiliser les films vendus par la société Westlake sous l'appellation "Acetal film" qui peuvent être décolorés par application d'un laser autour de 600 nm. On peut aussi appliquer directement le produit actif correspondant. Si nécessaire, on prévoit des espaceurs ou intercalaires entre le support et le film. On notera que les films "Acetal films" sont disponibles en diverses couleurs. Dans ce cas, l'épaisseur de la couche opaque est typiquement de quelques microns.

Le procédé comprend ensuite une étape d'irradiation de la couche opaque, par l'arrière, i. e. à travers les micro-lentilles, avec un rayonnement approprié à la nature de la couche opaque. Pour cet exemple, on utilise la lumière prévue pour décolorer le matériau. Cette lumière est concentrée au voisinage des points focaux des micro-lentilles : le matériau est donc décoloré au voisinage des points focaux des micro-lentilles. Après l'irradiation, le matériau est transparent au voisinage des points focaux des lentilles, et est opaque ailleurs. On peut alors si nécessaire déposer une couche protectrice, un substrat, ou une couche anti-reflet.

Dans cet exemple, le matériau est le matériau de la couche opaque, et la formation de la couche opaque s'effectue en même temps que l'irradiation par décoloration du matériau.

On pourrait aussi utiliser une décoloration de verres rendus opaques en surface, qui sont rendus transparents par irradiation (précipitation métallique transformée en oxydes transparents par irradiation).

En comparaison du procédé de formation d'une couche opaque décrit dans US-A-5 563 738, le procédé de l'invention assure la formation de véritables ouvertures dans la couche opaque, d'une dimension contrôlée; on assure ainsi une transmission adéquate sur toute la surface de l'écran. On augmente ainsi la transmittivité de l'écran, et donc le contraste. Dans ce brevet américain, l'opacité de la couche de liaison des micro-billes est choisie de sorte à laisser passer la lumière projetée de l'arrière vers l'avant, autour des points de contact entre les micro-billes et leur support; ceci plaide en faveur d'une faible opacité. Toutefois, l'opacité est nécessaire pour absorber la lumière incidente sur la face avant de l'écran. L'opacité de la couche de liaison est donc le résultat d'un compromis entre la transmittivité de l'arrière vers l'avant, et l'absorption de l'avant vers l'arrière. L'invention permet d'éviter ce compromis, et de fournir une couche de liaison des billes très opaque, tout en conservant une bonne transmittivité dans le sens de l'arrière vers l'avant.

Le procédé de l'invention s'applique aussi bien au cas d'éléments focalisants qui ne sont pas des micro-lentilles, mais des billes, comme dans le brevet US-A-5 563 738. Dans ce cas, le procédé de l'invention permet d'améliorer encore le contraste des écrans. Le procédé est décrit en référence à la figure 3, qui montre un exemple de support à micro-billes.

Le support 44 est recouvert d'une couche opaque 46, puis d'une couche de liaison 48, dans laquelle sont disposées des micro-billes 50. On forme ensuite une deuxième couche opaque 52, par-dessus la couche de liaison; cette deuxième couche opaque permet de limiter la lumière transmise à travers les interstices entre les billes lors de l'étape d'irradiation. On peut ensuite former d'autres couches, comme expliqué dans le brevet précité, pour mieux contrôler la focalisation par les micro-billes.

On procède ensuite à la formation d'ouvertures 54 dans la couche opaque, selon l'invention. Le procédé comprend donc une étape d'irradiation de la couche opaque 46, par l'arrière, i. e. à travers les micro-billes, avec un rayonnement approprié à la nature de la couche opaque. Du fait de la présence de la deuxième couche opaque 52, la lumière passant entre les micro-billes n'irradie pas la première couche opaque 46. On peut notamment appliquer les deuxième modes de réalisation et l'exemples décrits plus haut, et procéder à la destruction ou à la décoloration du matériau de la couche opaque. Ces modes de réalisation sont intéressants pour la structure de la figure 3, en ce qu'ils peuvent être utilisés sans accès à la couche opaque.

On forme de la sorte de réelles ouvertures dans la couche opaque 46; comme expliqué ci dessus, on peut de ce fait utiliser un matériau très opaque pour la couche opaque. Il est clair qu'après la formation des ouvertures, la deuxième couche opaque 52 n'est plus indispensable, car la lumière passant entre les billes est arrêtée par la première couche opaque 46. On peut donc l'enlever, et la remplacer par d'autres couches.

Comme ceci est expliqué en référence à la figure 2 dans le mode de réalisation utilisant des micro-lentilles, on peut pour le mode de réalisation de la figure 3 ajouter un diffuseur, et notamment un diffuseur holographique.

En référence aux figures 4 et 5 est décrit un écran utilisable pour une projection frontale. L'écran des figures 4 et 5 présente une structure analogue à celle de l'écran de la figure 2, mais avec un réflecteur.

Plus précisément, l'écran comprend un support 60 avec des éléments de focalisation - dans l'exemple de la figure des micro-lentilles 61. Au voisinage des points focaux des micro-lentilles, sur la face du support opposée aux micro-lentilles, est prévu une couche opaque 62, avec des ouvertures 63. Les ouvertures peuvent présenter les mêmes caractéristiques que les ouvertures discutées plus haut en référence aux figures 1 à 3. L'écran présente encore un réflecteur 65, qui réfléchit la lumière passant par les ouvertures. Il s'agit avantageusement d'un réflecteur holographique, par exemple d'un diffuseur holographique présentant un film réflecteur en aluminium externe; un tel réflecteur holographique est commercialisé par la société Physical Optics Corporation, et permet de contrôler la directivité de la lumière réfléchie. On peut aussi utiliser les réflecteurs de la société américaine Krystal Holographics International, Inc. On peut encore utiliser comme réflecteur les structures à micro-prismes ou autres bien connues en soi de l'homme du métier. Ces structures permettent de réfléchir la lumière, avec un angle contrôlé. L'ensemble peut être collé sur un substrat 67 en verre ou en plastique.

L'écran de la figure 4 peut être obtenu par les mêmes procédés que ceux décrits plus haut. Pour assurer un fonctionnement optimal de l'écran, et notamment pour assurer que les rayons projetés sur les bords sont réfléchis vers le spectateur, il est avantageux que l'étape d'irradiation soit effectuée avec une source disposée à l'endroit où doit ultérieurement être disposé le projecteur.

Le fonctionnement de l'écran en projection frontale est expliqué en référence aux figures 4 et 5. Il repose sur le principe que la lumière projetée sur l'écran provient d'une direction donnée, qui est celle du projecteur, alors que la lumière ambiante arrive de toutes les directions; la lumière du projecteur est alors sensiblement entièrement focalisée par les éléments de focalisation, et réfléchie par le réflecteur, dans la direction de l'utilisateur. Le fait d'utiliser un réflecteur holographique permet dans ce cas de contrôler la direction de réflexion de la lumière provenant du projecteur, et notamment de renvoyer vers le spectateur la lumière projetée sur les bords de l'écran. En revanche, la lumière ambiante, qui ne provient a priori pas du projecteur, est réfractée par les éléments de focalisation sur la couche opaque; elle est donc absorbée. L'écran présente donc un contraste beaucoup plus important que les écrans de projection classiques, et notamment plus important que les écrans diffusants, que les écrans perlés ou même que les écrans holographiques aluminisés commercialisés par la société Physical Optics Corporation. Il permet une projection dans une salle éclairée, sans qu'il ne soit nécessaire de supprimer toute lumière ambiante. Cette caractéristique est nouvelle et importante, et permet notamment une projection LCD à bas coût en salles de réunions, bureaux d'études ou autres lieux normalement éclairés.

La figure 4 montre l'écran, au voisinage de son centre. La figure 5 montre l'écran au voisinage de son bord. En traits pleins apparaissent les rayons incidents sur l'écran provenant du projecteur, qui sont majoritairement focalisés dans les ouvertures de la couche opaque, et réfléchis par le réflecteur vers les spectateurs; en traits pointillés apparaissent des rayons incidents de la lumière ambiante, qui sont majoritairement absorbés par la couche opaque. L'angle α sur les figures 4 et 5 représente le secteur angulaire dans lequel est renvoyée la lumière collimatée ou sensiblement collimatée provenant du projecteur; comme le montre la figure 4, pour le centre de l'écran, la lumière est renvoyée dans un secteur angulaire d'axe sensiblement perpendiculaire à l'écran, vers le public. Comme le montre la figure 5, sur les bords de l'écran, la lumière est renvoyée vers le centre de l'écran, dans un secteur angulaire qui est dirigé vers le public.

La figure 6 montre une représentation schématique en coupe d'un autre écran, dans l'exemple de la figure 6, on utilise comme éléments de focalisation des micro-lentilles, comme dans le mode de réalisation de la figure 2. On peut aussi utiliser comme éléments de focalisation des éléments lenticulaires, ou encore des réseaux lenticulaires croisés, comme suggéré dans la demande GB-A-369 611. Comme indiqué plus haut il est avantageux que les micro-lentilles 76 formées sur la face arrière 74 du support 72 présentent une focale importante, et typiquement une focale au moins cinq fois supérieure à leur taille. Dans l'exemple de micro-lentilles d'un rayon de l'ordre de 300 µm, la focale est ainsi supérieure à 1,5 mm. Plus généralement, une focale autour de 2 mm, par exemple entre 1,5 et 3 mm, est avantageuse.

Sur la face avant du support 72 est prévue une couche opaque 78, muni d'ouvertures 80 au voisinage des points de focalisation des éléments de focalisation. Cette couche opaque et ses ouvertures peuvent être réalisées par l'un des procédés proposés plus haut. Il est avantageux dans ce mode de réalisation aussi que le rapport entre la surface des ouvertures et la surface totale de la couche opaque soit inférieur à 10%, voire inférieur à 5%.

Sur la couche opaque est collé par une colle 81 un diffuseur holographique 82, dont la face avant présente le gaufrage holographique. Le fait de disposer le diffuseur dans ce sens, c'est-à-dire la face lisse contre la couche opaque présente les avantages suivants. D'une part, on évite toute trace de colle sur le gaufrage holographique, ce qui préserve la directivité de l'écran. Il n'est pas nécessaire de prévoir dans ce mode de réalisation un mode d'encollage complexe pour éviter de coller l'écran holographique. Comme représenté sur la figure, la colle peut être appliquée sur la couche opaque et dans les ouvertures, sur une épaisseur qui peut être importante : pour respecter la résolution, il suffit que l'épaisseur de la couche de colle 81 et du diffuseur 82 reste inférieure à la distance focale des éléments de focalisation. On peut donc prévoir une épaisseur de colle conséquente, par exemple de l'ordre de 0,5 mm, ce qui est avantageux en cas de conditions climatiques difficiles (hygrométrie et température).

En outre, du fait que l'écran holographique est tourné vers l'extérieur, la lumière ambiante incidente dans le cône d'émission est transmise vers le projecteur; le reste de la lumière incidente est quasiment totalement absorbé dans la couche opaque; l'écran présente donc un contraste important. Il présente une couleur noire sombre et franche, à l'inverse des dispositifs du genre de ceux commercialisés par exemple par la société Jenmar, dont la couleur est gris-jaune. On obtient selon l'invention un écran mat, présentant un contraste important et une directivité contrôlée.

On peut utiliser un autre type de diffuseur qu'un diffuseur holographique. Par exemple, on peut utiliser un diffuseur laiteux translucide, ou un diffuseur à sablage de surface. Dans le cas d'un diffuseur laiteux collé sur un substrat transparent, il set avantageux de coller le diffuseur directement sur la couche opaque; ceci limite la dégradation du contraste par rétrodiffusion dans le diffuseur, surtout si le substrat est muni d'une couche anti-reflet. Il peut aussi être intéressant dans ce cas de prévoir une couche opaque externe, de sorte à limiter la rétrodiffusion de la lumière incidente. Il est alors intéressant que l'épaisseur totale de l'écran soit de l'ordre de la distance focale des éléments de focalisation, pour que les ouvertures dans la couche opaque la plus proche de l'utilisateur vérifient les relations mentionnés plus haut (moins de 10% voire 5% de la surface totale).

La figure 7 montre une représentation schématique en coupe d'un écran selon un quatrième mode de réalisation de l'invention. Ce mode de réalisation permet d'obtenir un écran avec un fort contraste, une bonne directivité, et un aspect brillant. Il propose une solution alternative au collage du diffuseur holographique. Comme l'écran de la figure 6, l'écran de la figure 7 présente comme éléments de focalisation des micro-lentilles 76 formées sur la face arrière 74 d'un support 72. Comme expliqué pour les figures 1 et 2, on peut encore utiliser des éléments lenticulaires. On choisit les micro-lentilles et l'épaisseur du support de sorte que les rayons focalisés par les micro-lentilles soient divergents sur la face avant du support 72.

Dans l'exemple de micro-lentilles d'un diamètre de 300 µm, et d'une distance focale de 2 mm, on peut choisir un support d'une épaisseur de l'ordre de 2,5 mm. Dans ce cas, les ouvertures dans la couche opaque présentent un diamètre de l'ordre de 67 µm, et le rapport entre la surface totale des ouvertures et la surface totale de la couche opaque est d'environ 5%.

Dans le mode de réalisation de la figure 7, on prévoit une couche d'écartement entre le support des micro-lentilles et le diffuseur holographique. Cette couche d'écartement présente des ouvertures en correspondance des ouvertures de la couche opaque. Elle permet de coller le diffuseur holographique sur le support, avec le gaufrage holographique dirigé vers le support, sans que la colle n'affecte le fonctionnement du diffuseur. Comme le montre la figure 7, on peut prévoir sur la face avant du support une couche opaque 78, avec des ouvertures ménagées suivant l'un ou l'autre des procédés décrits plus haut. Cette couche opaque n'est pas obligatoire.

On donne l'exemple d'une couche d'écartement formée à l'aide d'une résine photosensible positive. On forme sur la couche opaque 78 une couche 84 de résine photosensible positive sur la couche opaque 78, ou sur la face avant du support en l'absence de couche opaque; cette couche présente avantageusement une épaisseur de quelques microns à quelques dizaines de microns; cette épaisseur dépend de la technique d'encollage utilisée ultérieurement et est suffisante pour éviter toute pollution des ouvertures par la colle. On peut ainsi utiliser les résines photosensibles à sec d'une épaisseur de 15, 30 ou 50 µm; ces résines sont laminées à sec sur le support. La couche de résine est exposée à travers l'écran, typiquement aux ultraviolets, de façon analogue à l'exposition de la couche opaque pour former les ouvertures, puis elle est développée. On forme ainsi dans la couche de résine des ouvertures 86 en correspondance avec les ouvertures de la couche opaque. Du fait de la divergence des rayons focalisés par les éléments de focalisation, ces ouvertures sont d'une forme conique.

On peut ensuite former une couche opaque 88 sur la couche 84 de résine photosensible, avec des ouvertures en correspondances avec les ouvertures dans la couche de résine photosensible, par exemple suivant l'un des procédés décrits plus haut. Il est aussi possible de former la couche opaque par impression offset à plat, ou par une autre technique d'impression; dans ce cas, la divergence des ouvertures dans la couche de résine photosensible permet que la couche opaque ne s'étende pas dans les ouvertures, et laisse passer la lumière focalisée par les éléments de focalisation.

La couche 88 est une deuxième couche opaque dans le cas où l'on a déjà formé une couche opaque sur la face avant du support; il peut aussi s'agir d'une première couche opaque si l'on n'a pas formé de couche opaque sur la face avant du support. Cette couche est aussi facultative, si l'on a déjà formé une couche opaque.

Du fait de l'existence de la couche de résine photosensible, et de son épaisseur, on peut ensuite coller un diffuseur, et par exemple un diffuseur holographique, avec un face interférométrique ou face de gaufrage holographique, tournée vers les éléments de focalisation. Il suffit pour cela de revêtir d'une couche de colle la couche 84 de résine photosensible, ou la couche opaque 88. Du fait de l'épaisseur de la couche et de la taille des ouvertures, il est possible de déposer la colle sans qu'elle ne bouche les ouvertures; on peut par exemple utiliser pour l'application de la colle une technique d'offset ou une autre technique, en fonction de l'épaisseur de la couche d'écartement. On applique ensuite sur la couche de colle un diffuseur 90. La face active du diffuseur est tournée vers les éléments de focalisation. Elle fonctionne néanmoins dans l'air, au niveau des ouvertures dans la ou les couches opaques et dans la couche de résine photosensible. On assure ainsi un fonctionnement correct du diffuseur, dont les propriétés ne sont pas affectées par la colle.

Dans le mode de réalisation de la figure 7, on a expliqué la formation de la couche d'écartement à l'aide d'une résine photosensible positive du commerce. On peut aussi utiliser une résine photosensible chargée pour la rendre opaque, comme déjà expliqué plus haut en ce qui concerne la couche opaque. Dans ce deuxième cas, il n'est plus indispensable de prévoir des couches opaques de part et d'autre de la couche d'écartement.

On peut encore utiliser le procédé appelé "lift-off": on applique une résine négative, qui est exposée et développée de sorte à laisser des plots en correspondance avec les rayons focalisés par les éléments de focalisation. On applique ensuite, par exemple par sérigraphie une couche opaque, typiquement du carbone noyé dans une résine non-photosensible, puis on élimine les plots de résine négative. Ceci permet d'obtenir une couche d'écartement opaque épaisse. On peut aussi dans le procédé de "lift-off" appliquer autour des plots une couche qui n'est pas opaque, et dans ce cas on garde une ou plusieurs des couches opaques adjacentes à la couche d'écartement.

On peut enfin utiliser pour former la couche d'écartement une couche laminée à sec sur le support, qui est détruite sur place aux lieux des rayons focalisés par les éléments de focalisation. Ce mode de réalisation est similaire à ce qui a déjà été expliqué plus haut pour la couche opaque.

L'écran peut être utilisé tel quel, la face avant de l'écran étant alors constituée de la face arrière du diffuseur. Dans ce cas, on évite tout dépôt de poussière sur la face active du diffuseur. On peut aussi ajouter à l'écran par collage une plaque transparente 92, de verre ou analogue, le cas échéant muni d'une couche anti-reflet 94. On confère ainsi à l'écran une rigidité mécanique plus importante. En outre, la présence du verre assure à l'écran un aspect brillant, qui peut être utile dans certaines applications. La présence sous le verre d'une ou plusieurs couches opaques assure un bon contraste et un aspect noir sombre de l'écran.

On peut aussi, bien que ceci ne soit pas représenté sur la figure, prévoir sur la face avant du diffuseur une couche opaque. Celle-ci est disposée entre le diffuseur et la plaque de verre 92; elle améliore l'aspect noir de l'écran, et augmente le contraste.

On comprend que dans la description de la figure 7, on peut former une, deux ou trois couches opaques, de part et d'autre de la couche 84 d'écartement, et de part et d'autre du diffuseur 90. Si la couche d'écartement est opaque, on peut se passer des couches opaques supplémentaires. La présence de plusieurs couches opaques améliore le contraste, et améliore aussi l'aspect noir de l'écran. Du fait de la divergence des rayons, il est possible que le rapport entre la surface des ouvertures et la surface totale de la couche opaque soit supérieur à 5 ou 10% pour la deuxième ou troisième couche. Toutefois, le contraste reste dans tous les cas élevé.

Le mode de réalisation de la figure 7 améliore les performances du diffuseur, et évite les aberrations provoquées par la colle ou par de la poussière qui pourrait se déposer sur la face active du diffuseur. Ceci augmente la durée de vie de l'écran. Le mode de réalisation de la figure 7 assure une bonne cohésion mécanique entre les différents éléments de l'écran, avec typiquement un collage sur plus de 90% de la surface entre le diffuseur et la résine photosensible; ceci renforce l'écran, indépendamment des différences entre les coefficients de dilatation des éléments qui compose l'écran - support des éléments de focalisation, diffuseur et plaque de verre. En outre, le fait que le diffuseur soit collé sur toute sa surface de façon uniforme assure que la transmission s'effectue aussi bien sur le centre du diffuseur que sur le bord de celui-ci. Cela rend possible la juxtaposition d'écrans dans un mur d'images sans effets de bords.

Bien entendu, la présente invention n'est pas limitée aux exemples et modes de réalisation décrits et représentés, mais elle est susceptible de nombreuses variantes accessibles à l'homme de l'art. Ainsi, il est clair que l'on peut faire varier la position relative des micro-lentilles et de leur support, dans la mesure où le point de focalisation des micro-lentilles est proche de la couche opaque. Dans le cas de la figure 1, on pourrait par exemple disposer les micro-lentilles sur la face avant du support, ajouter une couche intermédiaire transparente, puis une couche opaque au voisinage du point de focalisation des micro-lentilles. Dans le cas de la figure 2, on pourrait disposer les micro-lentilles sur la face avant du support 22, toujours en assurant que leur point de focalisation est voisin de la couche opaque.

On a décrit dans les modes de réalisation des figures des exemples de micro-lentilles et de micro-billes. On peut aussi selon l'invention utiliser des éléments de focalisation lenticulaires. Ainsi, les figures 2 et 7 peuvent correspondre aussi à des modes de réalisation avec des éléments lenticulaires, en coupe perpendiculairement à l'axe d'invariance des éléments lenticulaires. Le problème de Moiré mentionné plus haut disparaît avec des éléments diffuseurs, et notamment avec un diffuseur holographique.

On peut en outre prévoir sur l'écran de l'invention les traitements connus en soi, et par exemple des traitements anti-reflets d'un côté ou de l'autre de l'écran. Le terme de support utilisé pour les modes de réalisation de la figure 2 se réfère aux micro-lentilles; l'écran peut aussi comprendre un support rigide, tel qu'une plaque de verre ou un matériau faiblement diffusant. On peut aussi utiliser d'autres types de micro-lentilles que celles données à titre d'exemple.

Le procédé de l'invention n'est pas limité aux quatre modes de réalisation donnés à titre d'exemple. On peut aussi former la couche opaque par irradiation d'autres types de matériaux à travers les micro-lentilles ou les éléments focalisants. On peut aussi utiliser le procédé de "lift-off" de photolithographie : application de plots de résine photosensible négative aux points de focalisation des éléments de focalisation; recouvrement de toute la surface par une couche noire, puis enfin dissolution des plots de résine et de la couche noire à l'endroit de ces plots de résine pour ne conserver qu'une couche noire présentant des trous aux endroits des points de focalisation.

Dans l'ensemble de la description, on a utilisé les termes de couche opaque et d'ouverture transparente. Dans le cas d'une projection en couleurs, la couche opaque est typiquement noire, et les ouvertures sont transparentes, c'est-à-dire laissent passer toutes les longueurs d'onde de la lumière visible; en fait, le terme transparent s'entend comme transparent pour la lumière focalisée par les éléments de focalisation, et le terme opaque s'entend comme opaque pour la lumière focalisée par les éléments de focalisation. Ainsi, dans le cas d'un écran de projection destiné à être utilisé avec une lumière rouge, on pourrait utiliser une couche opaque bleue, de sorte à absorber la composante rouge de la lumière ambiante, et disposer d'un contraste élevé pour la couleur rouge.

On peut utiliser, notamment dans le modes de réalisation de la figure 7 d'autres diffuseurs que des diffuseurs holographiques. A titre d'exemple, on peut utiliser des diffuseurs en matériau transparent présentant une surface irrégulière, notamment une surface sablée. Dans le cas de la figure 7, la face irrégulière d'un tel diffuseur est dirigée vers les éléments de focalisation; la présence de la couche de résine photosensible et la divergence des rayons évite toute pollution de la couche active pour la diffusion par la colle.

## Revendications

1. Un écran, comprenant un support (22, 72) avec des éléments de focalisation (26, 76), une couche opaque (36, 78, 88) avec des ouvertures (38, 80) pour laisser passer la lumière focalisée par les éléments de focalisation, un diffuseur (30, 90) au voisinage de la couche opaque avec une surface active (34) dirigée vers la couche opaque, un substrat (40, 92) recouvrant la couche opaque et la surface active du diffuseur, la surface active du diffuseur fonctionnant dans l'air au niveau des ouvertures dans la couche opaque.

2. L'écran selon la revendication 1, **caractérisé en ce que** la couche opaque est voisine des points de focalisation des éléments de focalisation.

3. L'écran selon la revendication 1 ou 2, **caractérisé en ce que** les ouvertures sont non-ponctuelles.

4. L'écran selon la revendication 1, 2 ou 3, **caractérisé en ce que** les ouvertures présentent une dimension comprise entre 2 micromètres et 200 micromètres.

5. L'écran selon l'une des revendications 1 à 4, **caractérisé en ce que** les ouvertures représentent moins de 20% de la surface de la couche opaque, et de préférence moins de 10%, voire 5% de cette surface.

6. L'écran selon l'une des revendications 1 à 5, **caractérisé en ce qu'**il présente un contraste supérieur à 250, et de préférence supérieur à 500.

7. L'écran selon l'une des revendications 1 à 6, **caractérisé en ce que** les éléments de focalisation présentent une dimension comprise entre 20 micromètres et 1 millimètre.

8. L'écran selon l'une des revendications 1 à 7, **caractérisé en ce qu'**il présente une transmittivité supérieure à 70%.

9. L'écran selon l'une des revendications 1 à 8, **caractérisé en ce que** les éléments lenticulaires comprennent des micro-lentilles ou des micro-billes et **en ce que** le carré (φₜᵣₒᵤₛ/φ_{focalisation})² du rapport entre la dimension φₜᵣₒᵤₛ des ouvertures et la dimension φ_{focalisation} des éléments de focalisation est inférieur ou égal à 10%, de préférence inférieur ou égal à 5%.

10. L'écran selon l'une des revendications 1 à 8, **caractérisé en ce que** les éléments de focalisation comprennent des éléments lenticulaires, **en ce que** les ouvertures ont la forme de ligne, et **en ce que** le rapport entre la largeur d'une ligne et la distance entre deux lignes adjacentes est inférieur ou égal à 10%, de préférence inférieur ou égal à 5%.

11. L'écran selon l'une des revendications 1 à 10, **caractérisé en ce que** le taux de remplissage par les éléments de focalisation est supérieur ou égal à 90%.

12. L'écran selon l'une des revendications 1 à 11, **caractérisé en ce que** les éléments de focalisation comprennent des micro-billes.

13. L'écran selon la revendication 12, **caractérisé en ce qu'**il présente une transmittivité supérieure ou égale à 80%, de préférence supérieure ou égale à 85%.

14. L'écran selon l'une des revendications 1 à 11, **caractérisé en ce que** les éléments de focalisation comprennent des micro-lentilles ou des éléments lenticulaires.

15. L'écran selon la revendication 14, **caractérisé en ce qu'**il présente une transmittivité supérieure ou égale à 90%, de préférence supérieure ou égale à 95%.

16. L'écran selon l'une des revendications 1 à 15, **caractérisé en ce que** le diffuseur (30) est adjacent à la couche opaque, de préférence un diffuseur contrôlant la directivité.

17. L'écran selon la revendication 16, **caractérisé par** une couche d'écartement (84) entre le support et le diffuseur (90), de préférence d'une épaisseur entre quelques microns et quelques dizaines de microns.

18. L'écran de la revendication 17, **caractérisé en ce que** la surface active du diffuseur (90) est dirigée vers la couche d'écartement.

19. L'écran de la revendication 16, 17 ou 18, **caractérisé par** une plaque transparente (92) adjacente au diffuseur et collée à celui-ci.

20. L'écran selon la revendication 16, **caractérisé en ce que** le diffuseur est un diffuseur holographique.

21. Un procédé de fabrication d'un écran, comprenant les étapes de :
- fourniture d'un support (22, 30) présentant une pluralité d'éléments de focalisation (26), fourniture d'un diffuseur (30) avec une surface active (32) du côté du support opposé aux éléments de focalisation et fourniture d'un matériau s'étendant en couche au voisinage des points de focalisation des dits éléments de focalisation et au voisinage de la surface active (32);
- irradiation du matériau à travers les éléments de focalisation ;
- formation en utilisant le matériau irradié d'une couche opaque (36) présentant des ouvertures (38) découvrant la surface active;
- application sur la couche opaque d'un substrat (40), la surface active du diffuseur fonctionnant dans l'air au niveau des ouvertures dans la couche opaque.

22. Un procédé de fabrication d'un écran, comprenant les étapes de :
- fourniture d'un support (72) présentant une pluralité d'éléments de focalisation (76) et d'un matériau s'étendant en couche au voisinage des points de focalisation des dits éléments de focalisation;
- irradiation du matériau à travers les éléments de focalisation ;
- formation en utilisant le matériau irradié d'une couche opaque (78, 88) présentant des ouvertures;
- application sur la couche opaque d'un diffuseur (90) présentant une surface active dirigée vers ladite couche, la surface active du diffuseur étant dans l'air au niveau des ouvertures dans la couche opaque;
- application sur le diffuseur (90) d'un substrat (92).

23. Le procédé selon la revendication 21 ou 28, **caractérisé en ce que** les dits éléments de focalisation comprennent des micro-lentilles (6, 26), des éléments lenticulaires ou des micro-billes (50).

24. Le procédé selon la revendication 21 ou 22, **caractérisé en ce que** les éléments de focalisation comprennent des micro-billes et **en ce qu'**il comprend une étape de formation d'une deuxième couche opaque (52) entre les micro-billes, préalable à l'étape d'irradiation.

25. Le procédé selon l'une des revendications 21 à 24, **caractérisé en ce que** le matériau est une résine photosensible positive opaque, et **en ce que** l'étape de formation comprend :
- le développement de la résine.

26. Le procédé selon l'une des revendications 21 à 24, **caractérisé en ce que** le matériau est un matériau destructible par irradiation, et **en ce que** l'étape de formation s'effectue par destruction du matériau en même temps que l'étape d'irradiation.

27. Le procédé selon l'une des revendications 21 à 24, **caractérisé en ce que** le matériau est un matériau photographique positif, et **en ce que** l'étape de formation comprend :
- le développement du matériau photographique.

28. Le procédé selon l'une des revendications 21 à 24, **caractérisé en ce que** le matériau est un matériau décolorable par irradiation, et **en ce que** l'étape de formation s'effectue par décoloration du matériau en même temps que l'étape d'irradiation.

29. Le procédé selon l'une des revendications 22 à 28, **caractérisé en ce qu'**il comprend en outre les étapes de :
- formation sur le support ou la couche opaque d'une couche d'écartement (84) d'une épaisseur de quelques microns à quelques dizaines de microns ;
- formation d'ouvertures (86) dans la dite couche, en correspondance aux points de focalisation des dits éléments de focalisation;
- collage du dit diffuseur (90) sur la dite couche (84), la face active du diffuseur étant tournée vers la dite couche.

## Patentansprüche

1. Bildschirm, aufweisend einen Träger (22, 72) mit Fokussier-Elementen (26, 76), eine lichtundurchlässige Schicht (36, 78, 88) mit Durchgangsöffnungen (38, 80) zum Durchlassen des Lichts, das von den Fokussier-Elementen fokussiert wird, einen zu der lichtundurchlässigen Schicht benachbarten Diffusor (30, 90) mit einer aktiven Oberfläche (34) in Richtung zu der lichtundurchlässigen Schicht, ein Substrat (40, 92), das die lichtundurchlässige Schicht und die aktive Oberfläche des Diffusors abdeckt, wobei die aktive Oberfläche des Diffusors in der Luft auf Höhe der Durchgangsöffnungen in der lichtundurchlässigen Schicht wirksam ist.

2. Bildschirm gemäß Anspruch 1, **dadurch gekennzeichnet, dass** die lichtundurchlässige Schicht den Brennpunkten der Fokussier-Elemente benachbart ist.

3. Bildschirm gemäß Anspruch 1 oder 2, **dadurch gekennzeichnet, dass** die Durchgangsöffnungen nicht-punktuell sind.

4. Bildschirm gemäß Anspruch 1, 2 oder 3, **dadurch gekennzeichnet, dass** die Durchgangsöffnungen eine Größe zwischen 2 Mikrometern und 200 Mikrometern haben.

5. Bildschirm gemäß einem der Ansprüche 1 bis 4, **dadurch gekennzeichnet, dass** die Durchgangsöffnungen weniger als 20% der Oberfläche der lichtundurchlässigen Schicht repräsentieren, vorzugsweise weniger als 10% oder sogar 5% dieser Oberfläche.

6. Bildschirm gemäß einem der Ansprüche 1 bis 5, **dadurch gekennzeichnet, dass** er einen Kontrast über 250 aufweist, vorzugsweise über 500.

7. Bildschirm gemäß einem der Ansprüche 1 bis 6, **dadurch gekennzeichnet, dass** die Fokussier-Elemente eine Größe zwischen 20 Mikrometern und einem Millimeter haben.

8. Bildschirm gemäß einem der Ansprüche 1 bis 7, **dadurch gekennzeichnet, dass** er eine Durchlässigkeit von über 70% aufweist.

9. Bildschirm gemäß einem der Ansprüche 1 bis 8, **dadurch gekennzeichnet, dass** die linsenförmigen Elemente Mikro-Linsen oder Mikro-Kugeln aufweisen und **dadurch**, dass das Quadrat (Φ_{Bohrung} / Φ_{Fokussierung})² des Verhältnisses zwischen der Größe Φ_{Bohrung} der Durchgangsöffnungen und der Größe Φ_{Fokussierung} der Fokussier-Elemente kleiner oder gleich 10% ist, vorzugsweise kleiner oder gleich 5%.

10. Bildschirm gemäß einem der Ansprüche 1 bis 8, **dadurch gekennzeichnet, dass** die Fokussier-Elemente linsenförmige Elemente aufweisen, und **dadurch**, dass die Durchgangsöffnungen die Form einer Linie haben und **dadurch**, dass das Verhältnis zwischen der Größe einer Linie und dem Abstand zwischen zwei benachbarten Linien kleiner oder gleich 10% ist, vorzugsweise kleiner oder gleich 5%.

11. Bildschirm gemäß einem der Ansprüche 1 bis 10, **dadurch gekennzeichnet, dass** die Ausfüllrate der Fokussier-Elemente größer gleich 90% ist.

12. Bildschirm gemäß einem der Ansprüche 1 bis 11, **dadurch gekennzeichnet, dass** die Fokussier-Elemente Mikro-Kugeln aufweisen.

13. Bildschirm gemäß Anspruch 12, **dadurch gekennzeichnet, dass** er eine Durchlässigkeit über oder gleich 80% aufweist, vorzugsweise über oder gleich 85%.

14. Bildschirm gemäß einem der Ansprüche 1 bis 11, **dadurch gekennzeichnet, dass** die Fokussier-Elemente Mikro-Linsen oder linsenförmige Elemente aufweisen.

15. Bildschirm gemäß Anspruch 14, **dadurch gekennzeichnet, dass** er eine Durchlässigkeit über oder gleich 90% aufweist, vorzugsweise über oder gleich 95%.

16. Bildschirm gemäß einem der Ansprüche 1 bis 15, **dadurch gekennzeichnet, dass** der Diffusor (30), der vorzugsweise ein Diffusor ist, der die Richtwirkung steuert, an die lichtundurchlässige Schicht angrenzt.

17. Bildschirm gemäß Anspruch 16, durch eine Zwischenraum-Schicht (84) zwischen dem Träger und dem Diffusor (90) **gekennzeichnet**, vorzugsweise mit einer Dicke zwischen einigen Mikrons und einigen zehn Mikrons.

18. Bildschirm gemäß Anspruch 17, **dadurch gekennzeichnet, dass** die aktive Oberfläche des Diffusors (90) in Richtung zu der Zwischenraum-Schicht angeordnet ist.

19. Bildschirm gemäß Anspruch 16, 17 oder 18, **gekennzeichnet durch** eine transparente Platte (92) angrenzend an den Diffusor und an diesen geklebt.

20. Bildschirm gemäß Anspruch 16, **dadurch gekennzeichnet, dass** der Diffusor ein holographischer Diffusor ist.

21. Verfahren zum Herstellen eines Bildschirms, aufweisend die Schritte:
- Bereitstellen eines Trägers (22, 30), der eine Mehrzahl von Fokussier-Elementen (26) aufweist, Bereitstellen eines Diffusors (30) mit einer aktiven Oberfläche (32) auf der den Fokussier-Elementen gegenüberliegenden Seite des Trägers und Bereitstellen eines Materials, das sich in einer Schicht benachbart zu den Brennpunkten der Fokussier-Elemente und benachbart zu der aktiven Oberfläche (32) erstreckt;
- Bestrahlung des Materials durch die Fokussier-Elemente hindurch;
- Bilden, unter Verwendung des bestrahlten Materials, einer lichtundurchlässigen Schicht (36), die Durchgangsöffnungen (38) aufweist, die die aktive Oberfläche entblößen;
- Aufbringen eines Substrats (40) auf der lichtundurchlässigen Schicht, wobei die aktive Oberfläche des Diffusors in der Luft auf Höhe der Durchgangsöffnungen in der lichtundurchlässigen Schicht wirksam ist.

22. Verfahren zum Herstellen eines Bildschirms, aufweisend die Schritte:
- Bereitstellen eines Trägers (72) aufweisend eine Mehrzahl von Fokussier-Elementen (76) und eines Materials, das sich in einer Schicht benachbart zu den Brennpunkten der Fokussier-Elemente erstreckt;
- Bestrahlen des Materials durch die Fokussier-Elemente hindurch;
- Bilden, unter Verwendung des bestrahlten Materials, einer lichtundurchlässigen Schicht (78, 88), die Durchgangsöffnungen aufweist;
- Aufbringen eines Diffusors (90) auf der lichtundurchlässigen Schicht, der eine aktive Oberfläche in Richtung zu der Schicht aufweist, wobei die aktive Oberfläche des Diffusors in der Luft auf Höhe der Durchgangsöffnungen der lichtundurchlässigen Schicht ist;
- Aufbringen eines Substrats (92) auf den Diffusor (90).

23. Verfahren gemäß Anspruch 21 oder 28, **dadurch gekennzeichnet, dass** die Fokussier-Elemente Mikro-Linsen (6, 26), linsenförmige Elemente oder Mikro-Kugeln (50) aufweisen.

24. Verfahren gemäß Anspruch 21 oder 22, **dadurch gekennzeichnet, dass** die Fokussier-Elemente Mikro-Kugeln aufweisen und **dadurch**, dass es vor dem Schritt des Bestrahlens einen Schritt des Bildens einer zweiten lichtundurchlässigen Schicht (52) zwischen den Mikro-Kugeln aufweist.

25. Verfahren gemäß einem der Ansprüche 21 bis 24, **dadurch gekennzeichnet, dass** das Material ein positiv-fotosensibles lichtundurchlässiges Harz ist und **dadurch**, dass der Schritt des Bildens aufweist:
- das Entwickeln des Harzes.

26. Verfahren gemäß einem der Ansprüche 21 bis 24, **dadurch gekennzeichnet, dass** das Material ein durch Strahlung zerstörbares Material ist, und **dadurch**, dass der Schritt des Bildens sich durch die Zerstörung des Materials gleichzeitig zu dem Schritt des Bestrahlens vollzieht.

27. Verfahren gemäß einem der Ansprüche 21 bis 24, **dadurch gekennzeichnet, dass** das Material ein positiv-fotographisches Material ist, und **dadurch**, dass der Schritt des Bildens aufweist:
- das Entwickeln des fotographischen Materials.

28. Verfahren gemäß einem der Ansprüche 21 bis 24, **dadurch gekennzeichnet, dass** das Material ein durch Strahlung entfärbbares Material ist, und **dadurch**, dass sich der Schritt des Bildens durch Entfärben des Materials gleichzeitig zu dem Schritt des Bestrahlens vollzieht.

29. Verfahren gemäß einem der Ansprüche 22 bis 28, **dadurch gekennzeichnet, dass** es ferner die Schritte aufweist:
- Bilden einer Zwischenraum-Schicht (84) auf dem Träger oder der lichtundurchlässigen Schicht mit einer Dicke von einigen Mikrons bis einigen zehn Mikrons;
- Bilden von Durchgangsöffnungen (86) in der Schicht, korrespondierend zu den Brennpunkten der Fokussier-Elemente;
- Kleben des Diffusors (90) auf die Schicht (84), wobei die aktive Fläche des Diffusors der Schicht zugewandt ist.

## Claims

1. A screen, comprising a support (22, 72) with focusing elements (26, 76), an opaque layer (36, 78, 88) with apertures (38, 90) to allow light focused by said focusing elements to pass, a diffuser (30, 90) adjacent to said opaque layer with an active surface (34) directed towards said opaque layer, a substrate (40, 92) covering the opaque layer and the active surface of the diffuser, the active surface of the diffuser operating uncovered at the openings in the opaque layer

2. The screen according to claim 1, **characterized in that** the opaque layer is close to the focal points of the focusing elements.

3. The screen according to claim 1 or 2, **characterized in that** the apertures are not dot-shaped.

4. The screen according to claim 1, 2 or 3, **characterized in that** the apertures have a dimension comprised between 2 micrometers and 200 micrometers.

5. The screen according to one of claims 1 to 4, **characterized in that** the apertures make up less than 20% of the opaque layer surface, preferably less than 10%, and even 5% of this surface.

6. The screen according to one of claims 1 to 5, **characterized in that** it has a contrast greater than 250, and preferably greater than 500.

7. The screen according to one of claims 1 to 6, **characterized in that** the focusing elements have a dimension comprised between 20 micrometers and one millimetre.

8. The screen according to one of claims 1 to 7, **characterized in that** its transmissivity is greater than 70%.

9. The screen according to one of claims 1 to 8, **characterized in that** the square (φₕₒₗₑₛ/φ_{focusing})² of the ratio between aperture dimension φₕₒₗₑₛ and focusing element dimension φ_{focusing} is less than or equal to 10%, preferably less than or equal to 5%.

10. The screen according to one of claims 1 to 8, **characterized in that** the focusing elements comprise lenticular elements, the apertures are in the form of a line and the ratio between line width and a distance between two adjacent lines is less than or equal to 10%, preferably less than or equal to 5%.

11. The screen according to one of claims 1 to 10, **characterized in that** the filling ratio by focusing elements is greater than or equal to 90%.

12. The screen according to one of claims 1 to 11, **characterized in that** the focusing elements comprise microballs.

13. The screen according to claim 12, **characterized in that** it has a transmissivity greater than or equal to 80%, preferably greater than or equal to 85%.

14. The screen according to one of claims 1 to 11, **characterized in that** the focusing elements comprise microlenses or lenticular elements.

15. The screen according to claim 14, **characterized in that** it has a transmissivity greater than or equal to 90%, preferably greater than or equal to 95%.

16. The screen according to one of claims 1-15, **characterized in that** the diffuser (30) is adjacent to the opaque layer, preferably a diffuser controlling directivity.

17. The screen according to claim 16, **characterized by** a spacer layer (84) between the support and the diffuser (90), preferably of a thickness between a few microns and several tens of microns.

18. The screen of claim 17, **characterized in that** the active surface of the diffuser (90) is directed towards the spacer layer.

19. The screen of claim 16, 17 or 18 **characterised by** a transparent plate (92) adjacent to the diffuser and bonded thereto.

20. The screen according to claim 16, **characterized in that** the diffuser is a holographic diffuser.

21. A method for producing a screen, comprising the steps of:
- providing a support (22, 30) having a plurality of focusing elements (26), providing a diffuser (30) with an active surface (32) on the opposite side of said support to said focusing elements and supplying a layered material adjacent to the points of focus of said focusing elements and adjacent said active surface (32);
- irradiating said material through said focusing elements;
- forming, using the irradiated material, an opaque layer (36) having apertures (38) exposing the active surface;
- applying to said opaque layer a substrate (40), the active surface of the diffuser operating uncovered at the openings in the opaque layer.

22. A method for producing a screen, comprising the steps of:
- providing a support (72) having a plurality of focusing elements (76), and a layered material adjacent to the points of focus of said focusing elements;
- irradiating said material through said focusing elements;
- forming, using the irradiated material, an opaque layer (78, 88) having apertures;
- applying to said opaque layer a diffuser (90) having an active surface directed towards said layer, the active surface of the diffuser being in the air at the apertures in the opaque layer;
- applying a substrate (92) to said diffuser (90).

23. The method according to claim 21 or 22, **characterized in that** said focusing elements comprise microlenses (6, 26), lenticular elements or microballs (50).

24. The method according to one of claims 21 to 22, **characterized in that** the focusing elements comprise microballs and the method further comprises the formation of a second opaque layer (52) between the microballs, prior to the irradiation step.

25. The method according to one of claims 21 to 24, **characterized in that** the material is an opaque positive-going photosensitive resin, and the said formation step comprises:
- the development of said resin.

26. The method according to one of claims 21 to 24, **characterized in that** the material is a material that can be destroyed by irradiation and said formation step is performed by destruction of material at the same time as said irradiation step.

27. The method according to one of claims 21 to 24; **characterized in that** the material is a positive photographic material and **characterized in that** the formation step comprises:
- the development of said photographic material.

28. The method according to one of claims 21 to 24, **characterized in that** the material is a material able to be decolored by irradiation and **characterized in that** the formation step is performed by material decoloration at the same time as the said irradiation step.

29. The method according to one of claims 21 to 28, **characterized in that** it further comprises the steps of:
- forming, on said support or said opaque layer, a spacer layer (84) with a thickness of from a few microns up to several tens of microns;
- forming apertures (86) in said spacer layer, in correspondence with the focal points of said focusing elements;
- bonding said diffuser (90) onto said spacer layer (84), an active face of said diffuser being directed towards said spacer layer.
